# EUROPEAN PATENT APPLICATION

(11) **EP 1 621 979 A2**
(43) Date of publication of application: **01.02.2006**
(21) Application number: 05005146.5
(22) Date of filing: 09.03.2005
(51) Int. Cl.: G06F 3/033

(54) **Contrast control for an LCD in a keyboard and display assembly**

(30) Priority: 08.04.2004 US 820588
(71) Applicant: Paxar Americas, Inc., Miamisburg, Ohio 45342 (US)
(72) Inventor: Edwards, Floyd Allen, Dayton, OH 45414 (US)
(74) Representative: von Hellfeld, Axel

(57) **Abstract**

A keyboard and multi-line display assembly includes a liquid crystal display and a keyboard having a plurality of keys. At least one key of the keyboard is coupled to the display for contrast control, bypassing a processor of the assembly to which the other keys of the keyboard are coupled for data entry. The contrast control key, which is coupled to the display by a digital potentiometer, allows a user to adjust the contrast of the display on the fly without having to exit a data entry mode or to enter a set-up mode.

## Description

### TECHNICAL FIELD

The present invention is directed to a keyboard and multi-line display assembly and more particularly, to such an assembly wherein at least one key of the keyboard is coupled to the display for contrast control bypassing the processor to which the other keys of the keyboard are coupled to allow a user to adjust the display's contrast on the fly during the display of any number of lines of information.

### BACKGROUND OF THE INVENTION

Keyboard and display assemblies are known to include a multi-line liquid crystal display (LCD) and a keyboard having a number of alpha-numeric data entry keys and control keys. In these known assemblies, all of the keys of the keyboard are coupled to a processor to provide key entered data to the processor where the processor is also coupled to the display to control the information depicted on the display. The contrast setting of the display in these types of assemblies can be set by a user in a set-up mode using the keyboard to enter a selected contrast setting to the processor. The processor is programmed according to stored software to respond to the user selected contrast setting to provide control signals to the display in order to set the display's contrast level. Once set, the contrast of the display cannot be reset without the assembly being put back into the set-up mode. As such, if the user is in the process of a data entry operation and the display's contrast needs to be adjusted, the user must exit the data entry mode and enter the set-up mode. It has been found, that for multi-line displays, the contrast level for easily viewing one line of displayed information can vary greatly from the contrast level needed to easily view many lines of displayed information. As such, there may be no single contrast setting that works well for the display of one line of information and for the display of multiple lines of information. It is extremely cumbersome for a user to have to exit the data entry mode and enter the set-up mode to adjust the display's contrast depending on the number of lines of information being depicted in a given screen of information on the display.

### BRIEF SUMMARY OF THE INVENTION

In accordance with the present invention, the disadvantages of prior keyboard and display assemblies have been overcome. The keyboard and display assembly of the present invention includes at least one key of the keyboard that is coupled to the display for contrast control, bypassing the processor to which the other keys of the keyboard are coupled so that the user can adjust the display's contrast on the fly without having to exit a data entry mode and enter a set-up mode.

More particularly, the keyboard display assembly of the present invention includes a liquid crystal display capable of displaying information on a plurality of lines. A processor of the assembly controls the information depicted on the display. A keyboard has a plurality of keys including a plurality of data entry keys that are coupled to the processor to provide an input thereto and the keyboard having at least one contrast key for controlling the contrast of the liquid crystal display wherein the contrast key is coupled to the liquid crystal display; bypassing the processor.

In accordance with another feature of the present invention, a potentiometer couples the contrast key to the display wherein the potentiometer changes its resistance in response to the contrast key being actuated. In a preferred embodiment, the potentiometer is a digital potentiometer.

In accordance with a further feature of the present invention, the keyboard and display assembly includes a first contrast key for increasing the display's contrast and a second contrast key for decreasing the display's contrast wherein each of the contrast keys is coupled to a potentiometer that changes its resistance in response to one or the other of the contrast keys being pushed.

These and other advantages and novel features of the present invention, as well as details of an illustrated embodiment thereof, will be more fully understood from the following description and drawings.

### BRIEF DESCRIPTION OF THE SEVERAL VIEWS

### OF THE DRAWING

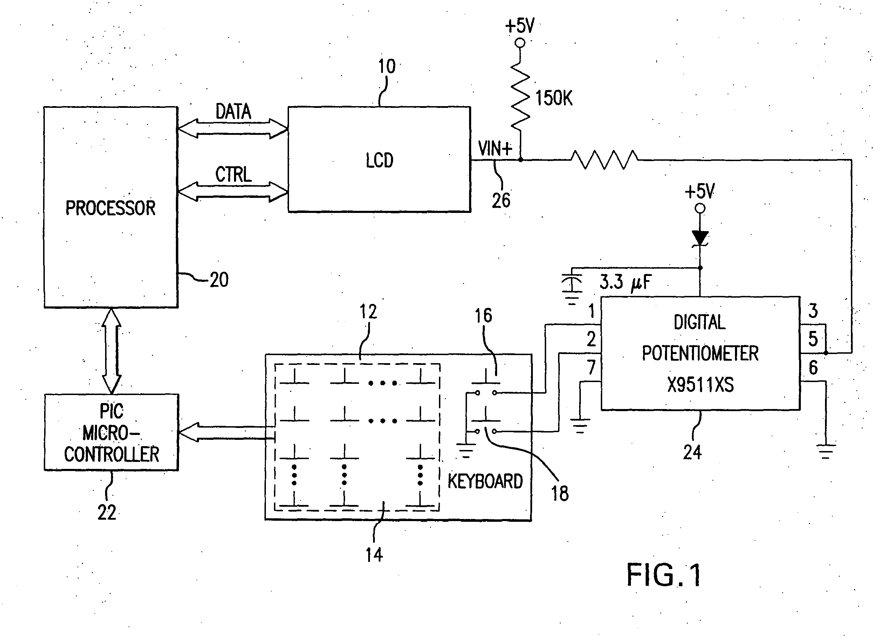

Fig. 1 is a block diagram illustrating the keyboard and display assembly of the present invention.

### DETAILED DESCRIPTION OF THE INVENTION

The keyboard and display assembly of the present invention, as shown in Fig. 1, includes a liquid crystal display (LCD) 10 that is capable of displaying information simultaneously on multiple lines of the display 10. The contrast control of the present invention is particularly well suited for LCDs capable of displaying at least five lines of information. In a preferred embodiment, the LCD 10 is capable of displaying nine lines of information.

The keyboard and display assembly of the present invention also includes a keyboard 12 having a number of keys 14, 16 and 18. A set of keys 14 includes alpha-numeric keys and preferably control keys such as an enter key and one or more cursor keys, etc. The set of keys 14 is coupled to a processor 20 via a PIC micro-controller 22 for data entry and mode selection or the like. Two keys 16 and 18 of the keyboard 12 are coupled directly to the LCD 10 for contrast control of the display, wherein the coupling of the keys 16 and 18 to the LCD 10 bypasses the processor 20.

The processor 20 is programmed by software to be responsive to inputs from the keys 14 to depict various information on one or more lines of the display 10. In a data entry mode, for example, the processor 20 may control the display 10 to depict information prompting the user to enter or select various types of data. In a set-up mode, the processor 20 may also control various set-up options of the keyboard and display assembly and/or a device, such as a barcode label printer or the like, of which the keyboard and display assembly forms a part. It is noted that where the keyboard and display assembly of the present invention forms a part of a larger device such as a printer, the processor 20 is preferably used to control not only the display but other components of the device as well. Alternatively, the processor 20 can be a processor dedicated to the keyboard 12 and display 10. In the set-up mode, if desired, the processor 20 can be responsive to user actuation of one or more of the set of keys 14 to set a default contrast setting for the liquid crystal display 10. However, the contrast control keys 16 and 18 are actuable by a user at any time, regardless of the mode of the processor 20 to allow a user to adjust the display's contrast on the fly without reentering the set-up mode.

More particularly, each of the keys 16 and 18 is connected to a digital potentiometer 24 that couples the contrast keys 16 and 18 to the display 10 for controlling the contrast thereof directly, while bypassing the processor 20. The digital potentiometer 24 is responsive to the actuation of the contrast key 16 such that the key 16 is pressed or pushed down by increasing the resistance of the potentiometer 24 each time the key 16 is actuated or pressed. Similarly, the digital potentiometer 24 is responsive to the actuation of the contrast key 18 to decrease its resistance each time the contrast key 18 is actuated or pressed. The digital potentiometer 24 provides a voltage on an input line 26, designated VIN+ of the LCD 10 wherein the voltage level varies depending on the resistance of the digital potentiometer 24 which in turn is determined by the actuation of the switches 16 and 18. The voltage or signal on the line 26 input to the LCD 10 controls the contrast level of the LCD 10. Because the contrast keys 16 and 18 are coupled to the LCD 10, bypassing the processor 20, a user can adjust the contrast of the display 10 at any time, regardless of the mode of the processor 20. For example, when operating the keyboard and display assembly, one screen depicted on the display 10 may depict only a single line of information. If the next screen of information depicted on the LCD 10 includes multiple lines of data, the user can actuate the keys 16 and 18 to adjust the contrast of the LCD 10 so that all of the lines of information are easily viewable. The contrast control for the LCD 10 in accordance with the present invention is simple and elegant and solves a problem which otherwise would require a fairly complex software fix for the processor 20.

Many modifications and variations of the present invention are possible in light of the above teachings. Thus, it is to be understood that, within the scope of the appended claims, the invention may be practiced otherwise than as described hereinabove.

## Claims

1. A keyboard and display assembly comprising:
a liquid crystal display capable of displaying information on a plurality of lines;
a processor controlling the information depicted on the display; and
a keyboard having a plurality of data entry keys coupled to the processor and at least one contrast key for controlling the contrast of the liquid crystal display, the contrast key being coupled to the liquid crystal display bypassing the processor.

2. A keyboard and display assembly as recited in claim 1 wherein the display is capable of displaying information on at least five lines.

3. A keyboard and display assembly as recited in claim 1 including a first contrast key for increasing the display's contrast and a second contrast key for decreasing the display's contrast.

4. A keyboard and display assembly as recited in claim 1 including a potentiometer coupling the contrast key to the display, the potentiometer changing its resistance in response to the contrast key being actuated.

5. A keyboard and display assembly as recited in claim 1 including a digital potentiometer coupling the contrast key to the display, the digital potentiometer changing its resistance in response to the contrast key being pressed.

6. A keyboard and display assembly comprising:
a display capable of displaying information on a plurality of lines;
a processor controlling the information depicted on the display;
a keyboard having a plurality of keys coupled to the processor and at least one contrast control key coupled to the liquid crystal display by a potentiometer such that the coupling of the contrast control key bypasses the processor.

7. A keyboard and display assembly as recited in claim 6 wherein the potentiometer is a digital potentiometer that changes its resistance in response to the contrast key being pressed.

8. A keyboard and display assembly as recited in claim 6
wherein the display is a liquid crystal display.

9. A keyboard and display assembly comprising:
a liquid crystal display capable of displaying information on at least five lines;
a processor controlling the information depicted on the display;
a keyboard having a plurality of keys coupled to the processor and a first contrast control key coupled to the liquid crystal display by a potentiometer to increase the display's contrast and a second contrast control key coupled to the liquid crystal display by the potentiometer to decrease the display's contrast, wherein the first and second contrast control keys are coupled to the liquid crystal display bypassing the processor.

10. A keyboard and display assembly as recited in claim 9 wherein the potentiometer is a digital potentiometer that changes its resistance in response to either the first or second contrast key being actuated.
